# EUROPÄISCHE PATENTSCHRIFT

(11) **EP 0 870 917 B1**
(45) Veröffentlichungstag und Bekanntmachung des Hinweises auf die Patenterteilung: **19.11.2003**
(21) Anmeldenummer: 98104487.8
(22) Anmeldetag: 12.03.1998
(51) Int. Cl.: F02D 41/24

(54) **Verfahren zur Steuerung der Kraftstoffeinspritzmenge bei einer Brennkraftmaschine in Kraftfahrzeugen**
Method for controlling the fuel injection quantity in the engine of a vehicle
Méthode de commande de la quantité de carburant à injecter dans le moteur d'un véhicule

(30) Priorität: 08.04.1997 DE 19714503
(43) Veröffentlichungstag der Anmeldung: 14.10.1998
(73) Patentinhaber: Bayerische Motoren Werke Aktiengesellschaft, 80788 München (DE)
(72) Erfinder: Jörgl, Volker, 2340 Mödling (AT); Weiss, Helmut, 4400 St. Ulrich (AT); Pabinger, Gerhard, 4451 Garsten (AT); Ertl, Christian, 4451 Garsten (AT)

(56) Entgegenhaltungen:
- DE-A- 4 223 520
- DE-C- 19 540 061
- US-A- 4 619 234
- PATENT ABSTRACTS OF JAPAN vol. 009, no. 333 (M-443), 27. Dezember 1985 (1985-12-27) & JP 60 164643 A (TOYOTA JIDOSHA KK), 27. August 1985 (1985-08-27)
- PATENT ABSTRACTS OF JAPAN vol. 009, no. 152 (M-391), 27. Juni 1985 (1985-06-27) & JP 60 027744 A (NISSAN JIDOSHA KK), 12. Februar 1985 (1985-02-12)

## Beschreibung

Die Erfindung bezieht sich auf ein Verfahren zur Steuerung der Kraftstoffeinspritzmenge bei einer Brennkraftmaschine in Kraftfahrzeugen nach dem Oberbegriff des einzigen Patentanspruchs.

Ein derartiges Verfahren ist beispielsweise aus dem PATENT ABSTRACT OF JAPAN 60164643 bekannt. Bei diesem bekannten Verfahren werden im Wesentlichen abhängig vom Unter- oder Überschreiten einer Geschwindigkeitsschwelle ein Nieder- bzw. Mittelgeschwindigkeitskennfeld oder ein Hochgeschwindigkeitskennfeld ausgewählt.

Beispielsweise eine Diesel-Brennkraftmaschine wird in ihrem Fahrverhalten über die Kraftstoffeinspritzmenge geregelt. Das Drehmoment der Diesel-Brennkraftmaschine ist direkt abhängig von der freigegebenen Kraftstoffeinspritzmenge. Der Drehmomentenwunsch des Fahrers wird üblicherweise über ein Fahrpedal vorgegeben. Ein elektronisches Steuergerät zur Steuerung der Kraftstoffeinspritzmenge ermittelt den Momentenwunsch des Fahrers durch Erfassung der entsprechenden Fahrpedalstellung mittels eines Sensors, insbesondere mittels eines Potentiometers. Das elektronische Steuergerät erfaßt darüber hinaus noch weitere Eingangssignale, insbesondere die Brennkraftmaschinendrehzahl und die Fahrzeuggeschwindigkeit. Üblicherweise ist im elektronischen Steuergerät ein Kennfeld abgespeichert, das in Abhängigkeit von der Brennkraftmaschinendrehzahl und von der erfaßten Fahrpedalstellung eine definierte Einspritzmenge vorgibt. Ein derartiges Kennfeld wird in Abhängigkeit von einer gewüschten Antriebscharakteristik erstellt. Die Antriebscharakteristik gibt an, wie das Fahrzeug in bestimmten Fahrzuständen auf einen Momentenwunsch des Fahrers reagiert. Ein derartiges Kennfeld wird daher auch als Fahrverhalten-Kennfeld bezeichnet. Ein derartiges Fahrverhalten-Kennfeld nach dem Stand der Technik stellt lediglich einen Kompromiß zwischen teilweise divergierenden Anforderungen an das Fahrverhalten, insbesondere bezüglich der Dosierbarkeit, dem Anfahrverhalten und dem Ansprechverhalten, dar.

Eine gute Dosierbarkeit verlangt bei einer geringen Änderung der Fahrpedalstellung eine geringe Änderung der Kraftstoffeinspritzmenge. Dagegen läßt sich ein verbessertes Ansprechverhalten lediglich dadurch erreichen, daß bereits kleine Änderungen der Fahrpedalstellung zu größeren Änderungen der Kraftstoffeinspritzmenge führen. Derselbe Zielkonflikt bezüglich der Anforderungen Dosierbarkeit und Ansprechverhalten besteht zwischen der Dosierbarkeit und dem Anfahrverhalten. Ein gutes Anfahrverhalten ist dadurch gekennzeichnet, daß bei in etwa gleichbleibender Fahrpedalstellung kleine Drehzahländerungen bereits zu relativ großen Änderungen der Kraftstoffeinspritzmenge führen müssen, andernfalls würde das Drehmoment und damit die Motorleistung nicht ausreichen, um das Fahrzeug zügig in Bewegung zu setzen. Diese Zielkonflikte lassen sich mit einer üblichen Steuerung der Kraftstoffeinspritzmenge über ein einziges Fahrverhaltenkennfeld nicht befriedigend lösen.

Es ist daher Aufgabe der Erfindung, ein Verfahren zur Steuerung der Krafstoffeinspritzmenge zu schaffen, die die Zielkonflikte zwischen den teilweise widersprüchlichen Anforderungen an das Fahrverhalten zufriedenstellender lösen.

Diese Aufgabe wird durch die kennzeichnenden Merkmale des Patentanspruchs gelöst.

Die Erfindung geht von der Erkenntnis aus, daß die unterschiedlichen Anforderungen an das Fahrverhalten in Abhängigkeit von der Fahrzeuggeschwindigkeit unterschiedlich priorisiert werden können. Beispielsweise kann das Anfahrverhalten besonders bei sehr niedrigen Fahrzeuggeschwindigkeitswerten bis zum Stillstand des Fahrzeugs, die Dosierbarkeit in einem mittleren Fahrzeuggeschwindigkeitsbereich und das Ansprechverhalten bei höheren Fahrzeuggeschwindigkeiten hervorgehoben werden. Erfindungsgemäß wird daher die Kraftstoffeinspritzmenge über eine Mehrzahl fahrzeuggeschwindigkeitsbezogener Kennfelder unterschiedlichen Fahrverhaltens vorgegeben.

In einer vorteilhaften Weiterbildung der Erfindung nach Patentanspruch 2 wird definierten Fahrzeuggeschwindigkeitswerten je ein fahrzeuggeschwindigkeitsbezogenes Kennfeld zugeordnet, wobei bei Fahrzeuggeschwindigkeits-Istwerten zwischen diesen definierten Fahrzeuggeschwindigkeitswerten die Kraftstoffeinspritzmenge durch Interpolation zwischen den Werten der Kennfelder vorgegeben wird. Somit wird die Anzahl der notwendigen Kennfelder trotz einer Optimierung des Fahrverhaltens in sämtlichen Fahrzuständen in Grenzen gehalten.

In der Zeichnung ist ein Ausführungsbeispiel der Erfindung dargestellt. Es zeigt
- Fig. 1: die Zuordnung unterschiedlicher abgespeicherter Kennfelder zu je einem definierten Fahrzeuggeschwindigkeitswert und
- Fig. 2: ein schematisches Blockschaltbild zur Realisierung des erfindungsgemäßen Verfahrens in einem elektronischen Steuergerät.

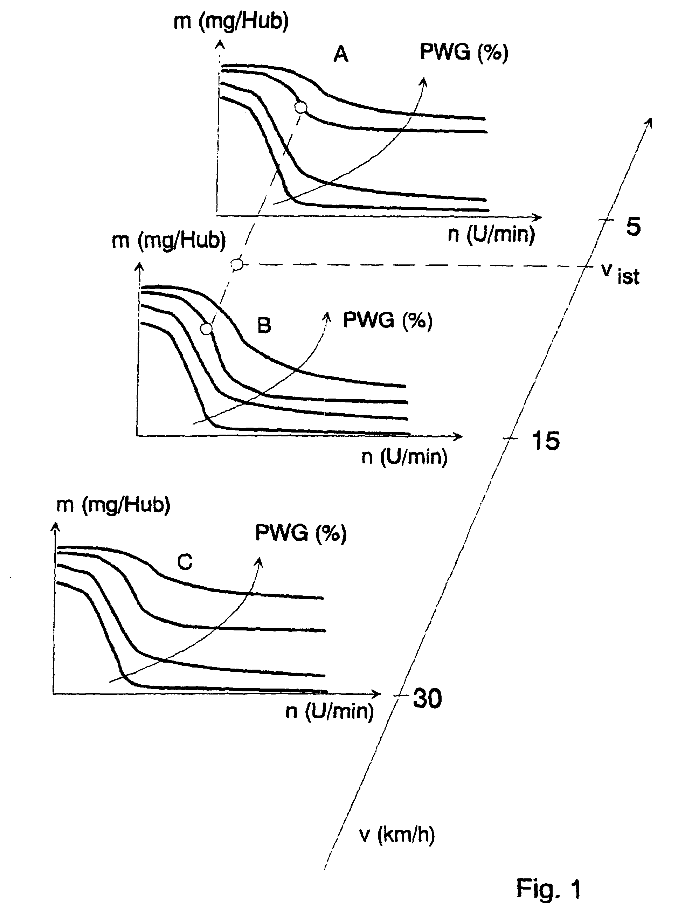

In Fig. 1 sind drei fahrzeuggeschwindigkeitsbezogene Kennfelder A, B und C, vorzugsweise für eine Diesel-Brennkraftmaschine, dargestellt. In Abhängigkeit von der Brennkraftmaschinendrehzahl n (U/min) und in Abhängigkeit von der Fahrpedalstellung PWG (%) wird eine Kraftstoffeinspritzmenge m (mg/Hub) durch Kennlinien, über die ggf. interpoliert wird, vorgegeben. Die Kennfelder A, B und C sind durch unterschiedliche Fahrverhalten gekennzeichnet. Die unterschiedlichen Fahrverhalten ergeben sich insbesondere durch die Priorisierung bevorzugter Anforderungen an das Fahrverhalten in Abhängigkeit von der Fahrzeuggeschwindigkeit v. Insbesondere kann beim Kennfeld A das Anfahrverhalten, beim Kennfeld B für niedrige, der Fahrpedalstellung zugeordnete Werte PWG die Dosierbarkeit bzw. für höhere, der Fahrpedalstellung zugeordnete Werte PWG das Ansprechverhalten und beim Kennfeld G insgesamt das Ansprechverhalten priorisiert werden.

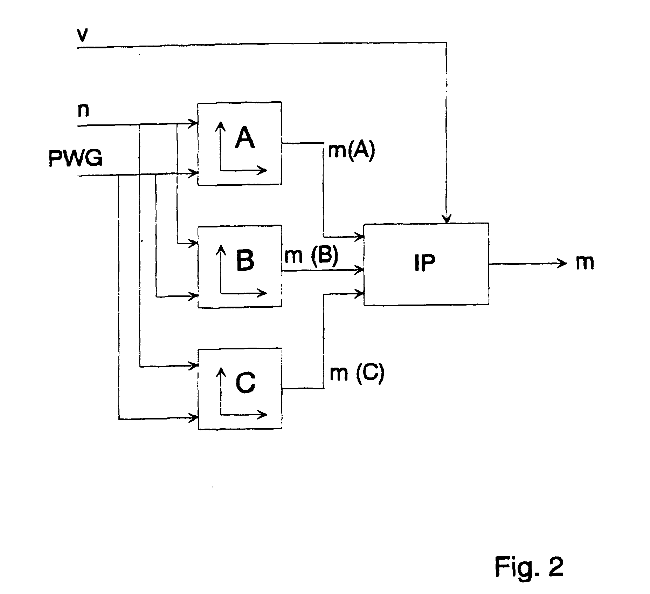

Das im elektronischen Steuergerät abgespeicherte Kennfeld A ist beispielsweise dem definierten Fahrzeuggeschwindigkeitswert v = 5 km/h, das Kennfeld B dem definierten Fahrzeuggeschwindigkeitswert v = 15 km/h und das Kennfeld C dem definierten Fahrzeuggeschwindigkeitswert v = 30 km/h zugeordnet. Liegt beipielsweise ein momentaner Fahrzeuggeschwindigkeits-Istwert vᵢₛₜ von 9 km/h vor, wird in Abhängigkeit von der momentan erfaßten Brennkraftmaschinendrehzahl n und der momentan erfaßten Fahrpedalstellung PWG sowohl aus dem Kennfeld A als auch aus dem Kennfeld B die vorgegebene Kraftstoffeinspritzmenge m(A) und m(B) ermittelt und anschließend durch Interpolation die tatsächlich einzuspritzende Kraftstoffeinspritzmenge m bestimmt (vgl. auch Fig. 2). Liegt der Fahrzeuggeschwindigkeitslstwert zwischen 15 und 30 km/h, findet eine Interpolation zwischen den Kennfeldern B und C statt. Bei Fahrzeuggeschwindigkeits-Istwerten, die kleiner als 5 km/h sind, findet nur das Kennfeld A und für Fahrzeuggeschwindigkeits-Istwerte, die größer als 30 km/h sind, nur das Kennfeld C Anwendung.

In Fig. 2 ist schematisch ein Blockschaltbild des erfindungsgemäßen Verfahrens dargestellt, wie es in einem elektronischen Steuergerät durch Hardware und/oder Software realisiert werden könnte.

Das Steuergerät erfaßt die Fahrzeuggeschwindigkeit v, die Brennkraftmaschinendrehzahl n und die Fahrpedalstellung PWG als Eingangssignale. Weiterhin weist das elektronische Steuergerät mindestens ein Ausgangssignal (hier nicht dargestellt) auf, das zur Ansteuerung der Kraftstoffpumpe und/oder der Kraftstoffeinspritzventile dient, um die vorgegebene Kraftstoffeinspritzmenge m an die Brennkraftmaschine auszugeben. Ergänzend wird darauf hingewiesen, daß das elektronische Steuergerät noch weitere Einund Ausgangssignale zur Realisierung auch anderer Funktionen der Brennkraftmaschine aufweisen kann.

Gemäß Fig. 2 werden die Signale der Brennkraftmaschinendrehzahl n und der Fahrpedalstellung PWG an die drei Kennfelder A, B und C weitergeleitet. In Abhängigkeit von der Brennkraftmaschinendrehzahl n und der Fahrpedalstellung PWG wird über die Kennfeld A, B und C zunächst eine Vorauswahl der Kraftstoffeinspritzmengen m(A), m(B) und/oder m(C) getroffen und an eine Interpolationseinheit IP weitergegeben. Die Interpolationseinheit IP erhält zusätzlich das Signal der Fahrzeuggeschwindigkeit v. In Abhängigkeit von dem momentanen Fahrzeuggeschwindigkeits-Istwert vᵢₛₜ findet die Interpolation zwischen je zwei vor-ausgewählten Kraftstoffeinspritzmengen statt, nach dem Beispiel in Fig. 1 m(A) und m(B), um die tatsächlich auszugebende Kraftstoffeinspritzmenge m zu ermitteln. Eine Interpolation findet jedoch nur dann statt, wenn sich der Fahrzeuggeschwindigkeits-Istwert zwischen zwei definierten, je einem Kennfeld zugeordneten Fahrzeuggeschwindigkeitswerten liegt.

Im dargestellten Ausführungsbeispiel wird über den gesamten Geschwindigkeitsbereich das Fahrverhalten optimiert.

## Patentansprüche

1. Verfahren zur Steuerung der Kraftstoffeinspritzmenge bei einer Brennkraftmaschine in Kraftfahrzeugen mittels eines elektronischen Steuergeräts, das als Eingangssignale die Brennkraftmaschinendrehzahl, die dem Drehmomentenwunsch des Fahrers entsprechende Fahrpedalstellung und die Fahrzeuggeschwindigkeit enthält und das über ein abgespeichertes Kennfeld zumindest in Abhängigkeit von der Brennkraftmaschinendrehzahl und dem Drehmomentenwunsch des Fahrers die Kraftstoffeinspritzmenge vorgibt, wobei die Kraftstoffeinspritzmenge (m) über eine Mehrzahl fahrzeuggeschwindigkeitsbezogener Kennfelder (A, B, C) unterschiedlichen Fahrverhaltens vorgegeben wird, **dadurch gekennzeichnet, daß** jedes abgespeicherte Kennfeld (A, B, C) je einem definierten Fahrzeuggeschwindigkeitswert (v= 5 km/h, v= 15 km/h, v= 30 km/h) zugeordnet ist und daß bei Vorliegen eines Fahrzeuggeschwindigkeits-Istwertes (vᵢₛₜ), der keinem abgespeicherten Kennfeld zugeordnet ist und der zwischen zwei definierten Fahrzeuggeschwindigkeitswerten (v= 5 km/h, v= 15 km/h) liegt, eine Kraftstoffeinspritzmenge (m) vorgegeben wird, die durch eine Interpolation der Kraftstoffmengen (m (A), m (B)) bestimmt wird, die durch die beiden, den definierten Fahrzeuggeschwindigkeitswerten (v= 5 km/h, v= 15 km/h) zugeordneten Kennfelder (A, B) vorgegeben sind.

## Claims

1. A method for controlling the fuel injection quantity in an intemal-combustion engine in motor vehicles by means of an electronic control device which contains, as input signals, the internal-combustion engine speed, the accelerator pedal position corresponding to the torque desired by the driver and the vehicle speed and which selects the fuel injection quantity via a stored characteristic map at least as a function of the internal-combustion engine speed and the torque desired by the driver, the fuel injection quantity (m) being selected via a plurality of vehicle speed-related characteristic maps (A, B, C) of different driving behaviour, **characterised in that** each stored characteristic map (A, B, C) is associated with a respective defined vehicle speed value (v = 5 km/h, v = 15 km/h, v = 30 km/h) and **in that** when there is an actual vehicle speed value (v_{actual}) which is not associated with any stored characteristic map and which lies between two defined vehicle speed values (v = 5 km/h, v = 15 km/h), a fuel injection quantity (m) is selected which is determined by interpolation of the fuel quantity (m(A), m(B)) which is selected by the two characteristic maps (A, B) associated with the defined vehicle speed values (v = 5 km/h, v = 15 km/h).

## Revendications

1. Procédé de commande de la quantité de carburant à injecter dans le moteur d'un véhicule au moyen d'une unité de commande électronique qui contient en tant que signaux d'entrée la vitesse du moteur à combustion interne, la position de pédale d'accélérateur correspondant au souhait de couple du conducteur et la vitesse du véhicule, et qui prédéfinit la quantité de carburant à injecter à l'aide d'un champ caractéristique mémorisé au moins en fonction de la vitesse du moteur à combustion interne et du souhait de couple du conducteur, la quantité de carburant (m) étant prédéfinie à l'aide d'une multitude de champs caractéristiques (A,B,C), relatifs à la vitesse du véhicule, de différents comportements de conduite,
**caractérisé en ce que**
chaque champ caractéristique (A, B, C) mémorisé est associé chacun à une valeur de vitesse du véhicule définie (v=5km/h, v=15 km/h, v=30 km/h), et lorsqu'il y a une valeur réelle de vitesse du véhicule (vᵢₛₜ) à laquelle aucun champ caractéristique n'est associé, et qui se situe entre deux valeurs de vitesse du véhicule définies (v=5 km/h, v=15 km/h), une quantité de carburant à injecter (m) est prédéfinie qui est déterminée par une interpolation des quantités de carburant (m(A), m(B)), qui sont prédéfinies par les deux champs caractéristiques (A, B) associés aux valeurs de vitesse du véhicule (v=5 km/h, v=15 km/h) définies.
